# EUROPÄISCHE PATENTSCHRIFT

(11) **EP 0 769 166 B1**
(45) Veröffentlichungstag und Bekanntmachung des Hinweises auf die Patenterteilung: **04.02.1998**
(21) Anmeldenummer: 95925809.6
(22) Anmeldetag: 03.07.1995
(51) Int. Cl.: G06F 1/20, G06F 1/16

(54) **AUFNAHMEVORRICHTUNG FÜR EINEN TRAGBAREN PC**
CONTAINER FOR A PORTABLE PC
MALLETTE POUR MICRO-ORDINATEUR PORTABLE

(30) Priorität: 02.07.1994 DE 9410720 U
(43) Veröffentlichungstag der Anmeldung: 23.04.1997
(73) Patentinhaber: Schwarzinger, Veronika, 1050 Wien (AT); Hödl, Fritz, 1060 Wien (AT); Uitz, Christian, 1120 Wien (AT)
(72) Erfinder: HÖDL, Fritz, A-1060 Wien (AT)
(74) Vertreter: Hilleringmann, Jochen, Dipl.-Ing.
(86) Internationale Anmeldenummer: EP9502566
(87) Internationale Veröffentlichungsnummer: WO9601447

(56) Entgegenhaltungen:
- DE-A- 3 121 906
- DE-A- 3 438 820
- DE-U- 9 302 359
- DE-U- 9 315 806
- US-A- 4 084 213
- US-A- 5 305 183

## Beschreibung

Die Erfindung betrifft eine Aufnahmevorrichtung für einen tragbaren PC, insbesondere eine Notebook, und Peripherie-Einrichtungen wie einen Drucker und Telekommunikationsvorrichtungen, nach dem Oberbegriff des Anspruchs 1, wie aus DE-U-93 02 359 bekannt.

Im Handel erhältlich sind tragbare Aufnahmevorrichtungen für Personal-Computer (PC), bei denen es sich insbesondere um sogenannte Notebooks handelt. Die Aufnahmevorrichtung ist dabei zumeist in Form eines Koffers, und zwar eines Hartschalen-Aktenkoffers ausgebildet, in dessen einer Schalenhälfte der tragbare PC sowie Peripherie-Einrichtungen, insbesondere ein Drucker, und Telekommunikationseinrichtungen, wie beispielsweise ein Modem und ein Funktelefon bzw. dessen Basisgerät, untergebracht sind. Bei Anordnung des PC und seiner Peripherie-Einrichtungen wird im Regelfall ein Formkörper in Form einer tiefgezogenen biegesteifen Folie eingesetzt, der mit Vertiefungen und Aufnahmen für die einzelnen Einrichtungen und den PC ausgestattet ist. Zur Energieversorgung der Peripherie-Einrichtungen und des PC wird bisher ein gemeinsames Netzteil verwendet, das unterhalb des PC oder, anders ausgedrückt, innerhalb der Aufnahmevorrichtung untergebracht ist. Das Netzteil übernimmt neben der Aufgabe der Energieversorgung auch die Aufgabe eines Ladegerätes zum Aufladen der Akkus des PC und der Peripherie-Einrichtungen, sofern diese akkubetrieben sind, wie dies beispielsweise bei dem Drucker der Fall ist. In der Praxis hat sich gezeigt, daß es mitunter zu Hitzestaus innerhalb der Aufnahmevorrichtung kommt, die durch den PC selbst und die Peripherie-Einrichtungen, nicht zuletzt aber auch durch das Netzteil hervorgerufen sind.

Aus DE-U-93 02 359 ist eine Aufnahmevorrichtung für einen tragbaren PC sowie Peripherie-Einrichtungen bekannt, die ein an das Spannungsnetz anschließbares Hauptnetzteil zur Erzeugung der für die Peripherie-Einrichtungen erforderlichen Betriebsspannungen aus der Netzspannung aufweist. Ferner ist ein ebenfalls an das Spannungsnetz anschließbares separates PC-Netzteil der zur Erzeugung für den PC erforderlichen Betriebsspannungen vorgesehen. Beide Netzteile sind unterhalb einer Grundplatte angeordnet, auf welcher sich der PC befindet.

Aus DE-A-31 21 906 ist eine Datenverarbeitungsanlage in Form einer Registrierkasse bekannt, die mit mehreren peripheren Zusatzgeräten versehen ist. Innerhalb der Datenverarbeitungsanlage ist ein Netzteil mit einem Gebläse angeordnet, das Kühlluft ansaugt, wobei diese Kühlluft an den peripheren Zusatzgeräten und den einzelnen Baugruppen der Datenverarbeitungsanlage vorbeigeführt wird. Die gesamte Datenverarbeitungsanlage ist in einem Gehäuse untergebracht.

Der Erfindung liegt die Aufgabe zugrunde, eine Aufnahmevorrichtung für einen tragbaren PC und dessen Peripherie-Einrichtungen zu schaffen, bei der es auch bei engster Unterbringung vom PC und dessen Peripherie-Einrichtungen nicht zu Problemen infolge mechanischer Erschütterungen und einer Überhitzung kommen kann.

Zur Lösung dieser Aufgabe wird mit der Erfindung eine Aufnahmevorrichtung mit den Merkmalen des Anspruchs 1 vorgeschlagen. Vorteilhafte Weiterbildungen ergeben sich aus den Unteransprüchen.

Die erfindungsgemäße Aufnahmevorrichtung umfaßt ein Hauptnetzteil zur Erzeugung der für die Peripherie-Einrichtungen erforderlichen Betriebsspannungen aus der Netzspannung und ein separates PC-Netzteil zur Erzeugung der für den PC erforderlichen Betriebsspannungen. Beide Netzteile sind über ein Kabel mit dem Spannungsnetz verbindbar; in dieser Betriebsart befindet sich der PC nicht im Akku-Betrieb, sondern wird von der Netzspannung versorgt. Ist die Aufnahmevorrichtung oder, genauer gesagt, sind die beiden Netzteile nicht mit dem Spannungsnetz verbunden, so arbeiten sämtliche Einrichtungen über Akkus. Bei der erfindungsgemäßen Aufnahmevorrichtung sind ferner die beiden Netzteile unterhalb des PC angeordnet. Dies geschieht in erster Linie aus Platzersparnisgründen. Die erfindungsgemäße Aufnahmevorrichtung ist darüber hinaus mit einer Kühlluftströmungs-Erzeugungsvorrichtung versehen. Diese Kühlluftströmungs-Erzeugungsvorrichtung erzeugt eine Kühlluftströmung zum Kühlen des Hauptnetzteiles. Erfindungsgemäß ist das PC-Netzteil derart angeordnet, daß es der Kühlluftströmung ausgesetzt ist. Vorzugsweise handelt es sich bei der Kühlluftströmungs-Erzeugungsvorrichtung um ein Gebläse, das zweckmäßigerweise im Hauptnetzteil selbst untergebracht ist. In diesem Fall ist das Hauptnetzteil mit einem Lufteinlaß und einem Luftauslaß versehen.

Bei der erfindungsgemäßen Aufnahmevorrichtung werden der PC sowie das dem PC zugeordnete PC-Netzteil durch eine modulare Umluftanlage (Kühlluftströmungs-Erzeugungsvorrichtung) ständig mit Frischluft versorgt. Der Vorteil dieser Maßnahme besteht darin, daß die Abwärme des PC unterhalb desselben ständig abgeführt wird, sobald der PC nicht akkubetrieben, sondern von seinem PC-Netzteil stromversorgt wird. Damit werden Wärmestaus innerhalb der Aufnahmevorrichtung vermieden. Wegen der platzsparenden Unterbringung der Komponenten des Hauptnetzteiles und der Vielzahl von anschließbaren Peripherie-Einrichtungen sowie Telekommunikationseinrichtungen ist es in jedem Fall zweckmäßig, das Hauptnetzteil selbst zu kühlen. Die Kühlluft kühlt aber bei der erfindungsgemäßen Aufnahmevorrichtung nicht nur das Hauptnetzteil, sondern wird auch an dem PC-Netzteil und zweckmäßigerweise auch an der den beiden Netzteilen zugewandten Unterseite des PC entlang geführt. Damit wird die Kühlluftströmung insoweit mehrfach zum Kühlen ausgenutzt.

Für die Anordnung der Netzteile und des PC ist es von untergeordneter Bedeutung, wo sich innerhalb des Kühlluftstroms diese Einheiten befinden. So ist es beispielsweise denkbar, daß beide Netzteile stromab oder stromauf der Kühlluftströmungs-Erzeugungsvorrichtung angeordnet sind. Schließlich ist es möglich, daß ein Netzteil stromauf und das andere stromab der Kühlluftströmungs-Erzeugungsvorrichtung angeordnet ist.

Erfindungsgemäß ist die Aufnahmevorrichtung ferner mit einem biegesteifen Formkörper aus insbesondere einer tiefgezogenen Folie versehen. Dieser Formkörper weist mehrere Aufnahmebereiche und Aufnahmevertiefungen für den PC und die Peripherie-Einrichtungen sowie die Netzteile auf. An den Formkörper sind überdies ein Lufteinlaß zum Einlassen von Luft in den Aufnahmebereich für den PC unterhalb desselben und ein Luftauslaß zum Auslassen von Luft aus dem Aufnahmebereich unterhalb des PC ausgebildet. Diese Luftein- und -auslässe bilden sich dadurch, daß der Aufnahmebereich für den PC eine unterbrochene, d. h. nicht umlaufend geschlossene Aufnahmefläche für den PC aufweist, so daß zwischen PC und Formkörper der Lufteinlaß und der Luftauslaß in Form von spaltartigen Öffnungen oder Durchlässen verbleibt. Die Aufnahmevorrichtung bzw. der Formkörper benötigt also keine Öffnungen oder dergleichen in ihren bzw. seinen Außenwänden. Vorzugsweise liegen der Lufteinlaß und der Luftauslaß an einander gegenüberliegenden Seiten des PC, so daß die Kühlluftströmung sich entlang der Unterseite des PC über dessen Breite bzw. Länge erstreckt. Der Formkörper ist zweckmäßigerweise in die eine Schalenhälfte eines Hartschalenkoffers, insbesondere eines Aktenkoffers, einsetzbar.

Aus Gründen des Schutzes des PCs und der Peripherie-Geräte gegen Beschädigungen durch (mechanische) Erschütterungen sollten der PC und die Peripherie-Geräte auf elastischen Auflageflächen ruhen.

Mit der Erfindung wird also vorgeschlagen, die elastischen Auflageflächen für den PC nicht durchgehend auszubilden sondern lediglich bereichs- bzw. punktweise, wobei in den Bereichen außerhalb der elastischen Auflageflächen Zwischenräume zwischen dem PC und dem Formkörper verbleiben. Diese Zwischenräume dienen zum Ansaugen und Abführen von das PC-Netzteil sowie das Hauptnetzteil kühlender Kühlluft.

Gemäß einer weiteren vorteilhaften Ausgestaltung der Erfindung ist der Formkörper mit elastisch ausgebildeten Auflagebereichen für den Drucker versehen.

Zweckmäßigerweise ist eine elastisch ausgebildete Abdeckung zur Anlage an der dem Formkörper abgewandten Oberseite zumindest von Notebook und/oder Drucker vorgesehen. Bei dieser Abdeckung handelt es sich insbesondere um eine elastische Kassette und/oder eine elastische Dämpfungsschicht.

Nachfolgend wird anhand der Figuren ein Ausführungsbeispiel der Erfindung näher erläutert. Im einzelnen zeigen:
- Fig. 1: eine perspektivische Darstellung eines Hartschalen-Aktenkoffers in aufgeklapptem Zustand mit in der Bodenschalenhälfte angeordnetem Notebook und Drucker,
- Fig. 2: eine Draufsicht auf einen in der Bodenschalenhälfte des Koffers gemäß Fig. 1 eingesetzten Formkörper zur Aufnahme des Notebooks, des Druckers, der Netzteile und der übrigen Peripherie-Geräte für den PC sowie diverser Telekommunikationseinrichtungen wie Modem, etc. und
- Fig. 3: einen Schnitt entlang der Linie III - III der Fig. 2 durch den Formkörper mit strich-punktiert angedeutetem Notebook und Netzteilen zur Verdeutlichung der sich unterhalb des Notebooks einstellenden Kühlluftströmung.
- Fig. 4: einen Schnitt durch den Koffer im aufgeklappten Zustand und
- Fig. 5: eine Schnittansicht in der Ebene V-V der Fig. 4.

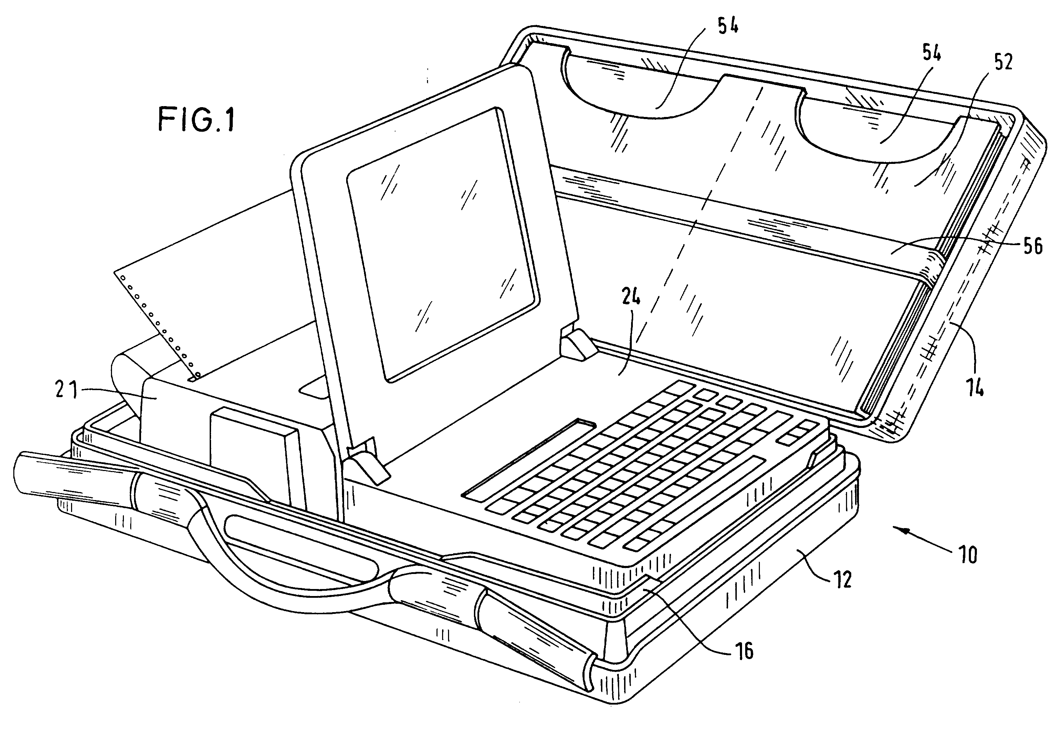

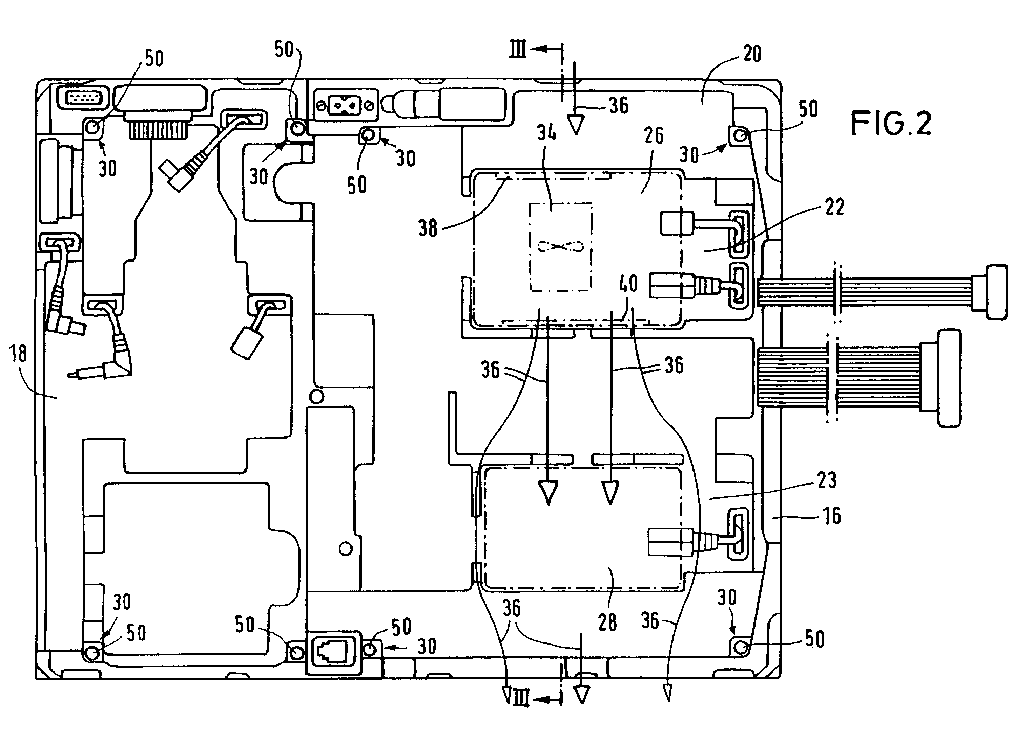

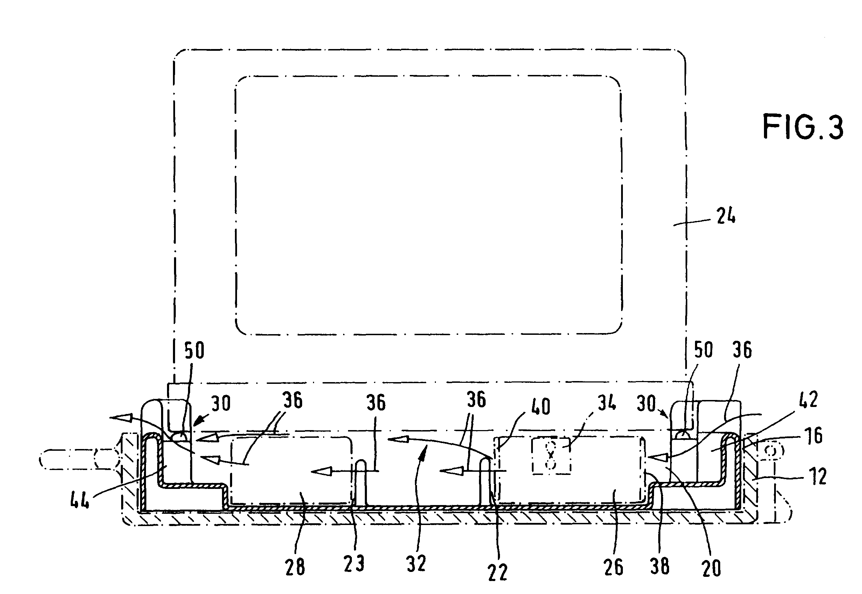

In Figur 1 ist perspektivisch ein liegend angeordneter Aktenkoffer 10 mit einem Bodenschalenteil 12 und einem aufgeklappten Deckelschalenteil 14 dargestellt. In den Bodenschalenteil 12 ist der in Figur 2 in Draufsicht dargestellte Formkörper 16 eingesetzt. Dieser Formkörper 16 weist eine Vielzahl von Aufnahmen und Aufnahmevertiefungen für diverse elektronische Geräte auf. Charakteristisch für den Formkörper 16 ist die Tatsache, daß er zwei obenliegende Aufnahmebereiche 18, 20 für einen Drucker 21 und ein PC-Notebook 24 aufweist. Unter diesen beiden Aufnahmebereichen 18, 20 sind in dem Formkörper 16 eine Vielzahl von Aufnahmevertiefungen für ein Modem, ein 3,5"-Disketten-Laufwerk, für Kabel, für eine Telefon-Datenschnittstelle, für ein Basisgerät eines Drahtlos-Telefons und für die Netzteile ausgebildet. Ferner ist der Formkörper mit Aufnahmen für Seriell- und Parallelstecker, für Netzeingangsstecker und für einige Bürobedarfsartikel, insbesondere für eine Heftmaschine und für Heftklammern, ausgestattet. Von Interesse im Rahmen des hier zu beschreibenden Aktenkoffers 10 sind die Aufnahmevertiefungen 22, 23 für das Hauptnetzteil (in Figur 2 bei 26 angedeutet) und das PC-Netzteil, das in Figur 2 bei 28 angedeutet ist. Beide Vertiefungen 22, 23 sind unterhalb des Aufnahmebereichs 20 für das PC-Notebook 24 ausgebildet. Das PC-Notebook 24 weist eine bereichsweise, d. h. nicht durchgehende Aufnahmefläche innerhalb des Aufnahmebereichs 20 auf, die sich aus den oberen Enden von vier im wesentlichen rechtwinklig angeordneten Auflagepunkten in Form von Erhöhungen oder Noppen 30 zusammensetzt. Wie man anhand von Figur 3 erkennen kann, weisen die Noppen 30 oder Erhöhungen 30 eine solche Höhe auf, daß die Unterseite 32 des PC-Notebooks 24 oberhalb der Netzteile 26, 28 angeordnet ist.

Wie in den Figuren ferner angedeutet, ist das Hauptnetzteil 26, das die Peripherie-Geräte mit den erforderlichen Betriebsspannungen versorgt, mit einem Gebläse 34 zur Erzeugung einer Kühlluftströmung (siehe Pfeile 36) versehen. Das Gebläse 34 ist innerhalb des Hauptnetzteiles 26 angeordnet. Das Hauptnetzteil 26 weist einen bei 38 angedeuteten Einlaß und einen bei 40 angedeuteten Auslaß auf. Über den Einlaß 38 wird Kühlluft angesaugt, die durch das Hauptnetzteil 26 hindurchströmt und über dessen Auslaß 40 wieder heraustritt. Diese Kühlluft streicht, wie in den Figuren gezeigt, dann weiter an dem PC-Netzteil 28 vorbei. Sie streicht aber auch an der Unterseite 32 des PC-Notebooks entlang, um auch dieses zu kühlen.

Wie in den Figuren 2 und 3 zu erkennen ist, ist die Aufnahmefläche in Form der Erhebungen 30 nicht umlaufend ausgebildet und erstreckt sich nicht über die gesamte Unterseite 32 des PC-Notebooks 24. Insbesondere sind im Randbereich des PC-Notebooks zwischen diesem und dem Formkörper 16 ein Abstand vorgesehen. An dem dem Lufteinlaß 38 des Hauptnetzteiles 26 nächstliegenden Rand des PC-Notebooks 24 und dem Formkörper 16 bildet sich ein Durchlaß 42, der dem Einlaß von Luft dient. An dem diesem Lufteinlaß 42 gegenüberliegenden Ende des Formkörpers 16 bildet sich zwischen diesem und dem PC-Notebook 24 wiederum ein Durchlaß 44, der der Abführung der Kühlluft dient und damit als Auslaß fungiert. Figur 3 zeigt den Kühlluftströmungsverlauf, demzufolge Kühlluft von außerhalb der Bodenschalenhälfte 12 über den Einlaß 42 Luft in den Aufnahmebereich 20 unterhalb des PC-Notebooks 24 angesaugt wird, durch das Hauptnetzteil 26 hindurchströmt, aus diesem heraustritt, um anschließend das PC-Netzteil 28 sowie die Unterseite 32 des PC-Notebooks 24 zu umströmen, und anschließend über den Auslaß 44 auszutreten.

Abschließend soll noch auf ein weiteres Merkmal des Hartschalen-Koffers 10 für ein Notebook 24 mit Peripherie- und Telekommunikationsgeräten (z.B. Drucker 21) eingegangen werden, und zwar auf die federnde und damit schock-absorbierende Unterbringung der Geräte in dem Koffer 10.

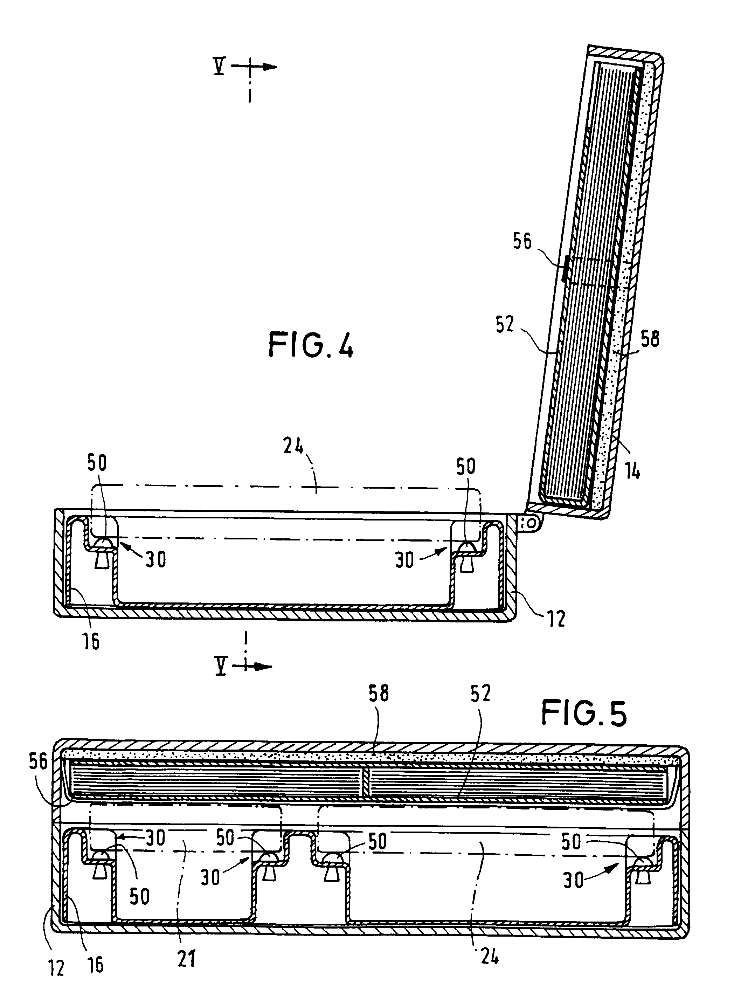

Zu diesem Zweck weist der in den Bodenschalenteil 12 des Koffers 10 eingesetzte (Tiefziehfolien-)Formkörper 16 an seinen Auflagepunkten 30 Schock-Absorber in Form von feder-elastischen Teilen 50 (insbesondere Gummi-Stopfen) auf, auf denen die Geräte (Notebook und Drucker) ruhen. Die Teile 50 sind in Löcher des Formkörpers 16 eingesteckt und stehen nach oben über (siehe Fign. 4 und 5). In dem Deckelschalenteil 12 des Koffers 10 ist eine Papieraufbewahrungskassette 52 mit zwei Fächern 54 eingesetzt. Diese Kassette 52 wird durch ein elastisches Band 56 gegen ein ungewolltes Herausklappen aus dem Deckelschalenteil 12 gehalten. Hinter der Kassette 52 ist zwischen dieser und dem Deckelteil 14 eine elastisch nachgiebige Auskleidungsplatte 58 (elastische Dämpfungsschicht) angeordnet.

Wie in Fig. 5 zu erkennen ist, liegt die Kassette 52 in geschlossenem Zustand des Koffers 10 auf den von dem Formteil 16 aufgenommenen Geräten (Notebook 24 und Drucker 21) auf, und zwar unter mechanischer Vorspannung, die infolge der elastischen Verformung (Stauchung) der Kunststoff-Kassette 52 und der elastischen Verdichtung der Auskleidungsplatte 58 hervorgerufen ist. Damit sind die Geräte an beiden großflächigen Seiten des Koffers 10 (unten die Schockabsorber 50 und oben die Kassette 52 und die Auskleidungsplatte 58) federnd und damit schockabsorbierend gelagert. Gegen seitlich auf den geschlossenen Koffer 10 einwirkende Erschütterungen sind die Geräte dadurch geschützt, daß sie einerseits von den Seitenwänden des Koffers 10 beabstandet sind und andererseits der Kunststoff-Formkörper 16 in diesem Abstandsbereich federnd wirkt.

## Patentansprüche

1. Aufnahmevorrichtung für einen tragbaren PC, insbesondere ein Notebook, und Peripherie-Einrichtungen, wie einen Drucker (21) und Telekommunikationseinrichtungen, mit
- einem an das Spannungsnetz anschließbaren Hauptnetzteil (26) zur Erzeugung der für die Peripherie-Einrichtungen erforderlichen Betriebsspannungen aus der Netzspannung und
- einem an das Spannungsnetz anschließbaren separaten PC-Netzteil (28) zur Erzeugung der für den PC (24) erforderlichen Betriebsspannungen,
- wobei beide Netzteile (26,28) unterhalb des PC (24) angeordnet sind,
**dadurch gekennzeichnet,**
- daß eine Kühlluftströmungs-Erzeugungsvorrichtung (34) zur Erzeugung einer Kühlluftströmung zum Kühlen des Hauptnetzteiles (26) vorgesehen ist,
- daß das PC-Netzteil (28) in der Kühlluftströmung angeordnet ist,
- daß ein biegesteifer Formkörper (16) zum Aufnehmen des PC (24), der Peripherie-Einrichtungen und der beiden Netzteile (26,28) vorgesehen ist,
- daß der Formkörper (16) einen Aufnahmebereich (20) mit einer unterbrochenen, nicht-umlaufenden, mit elastisch ausgebildeten Auflagebereichen (50) versehenen Aufnahmefläche (30) für den PC (24) aufweist, dergestalt, daß zwischen Formkörper (16) und dem PC (24) zumindest ein Lufteinlaß (42) zum Einlassen von Luft in den Aufnahmebereich (20) unterhalb des PC (24) und ein Luftauslaß (44) zum Auslassen von Luft aus dem Aufnahmebereich (20) unterhalb des PC (24) verbleiben, und
- daß innerhalb des Aufnahmebereichs (20) tiefergelegene Aufnahmevertiefungen (22,23) für die beiden Netzteile (26,28) vorgesehen sind.

2. Aufnahmevorrichtung nach Anspruch 1, dadurch gekennzeichnet, daß die Kühlluftströmungs-Erzeugungsvorrichtung (34) ein Gebläse ist.

3. Aufnahmevorrichtung nach Anspruch 2, dadurch gekennzeichnet, daß das Gebläse in dem Hauptnetzteil (26) untergebracht ist und daß das Hauptnetzteil (26) einen Lufteinlaß (38) und einen Luftauslaß (40) aufweist.

4. Aufnahmevorrichtung nach einem der Ansprüche 1 bis 3, dadurch gekennzeichnet, daß die beiden Netzteile (26, 28) stromab oder stromauf oder das eine Netzteil (26; 28) stromab und das andere Netzteil (28;26) stromauf der Kühlluftströmungs-Erzeugungsvorrichtung (34) angeordnet sind.

5. Aufnahmevorrichtung nach einem der Ansprüche 1 bis 4, dadurch gekennzeichnet, daß die Kühlluftströmungs-Erzeugungsvorrichtung (34) derart angeordnet ist, daß die Kühlluftströmung an der den Netzteilen (26,28) zugewandten Unterseite (32) des PC (24) entlang strömt.

6. Aufnahmevorrichtung nach einem der Ansprüche 1 bis 5, dadurch gekennzeichnet, daß der PC (24), die beiden Netzteile (26,28), die Kühlluftströmungs-Erzeugungsvorrichtung (34) und die Peripherie-Einrichtungen in einem Koffer, insbesondere einem Aktenkoffer (10), untergebracht sind.

7. Aufnahmevorrichtung nach einem der Ansprüche 1 bis 6, dadurch gekennzeichnet, daß der Formkörper (16) in eine Schalenhälfte (12) eines Koffers, insbesondere eines Aktenkoffers (10) einsetzbar ist.

8. Aufnahmevorrichtung nach einem der Ansprüche 1 bis 7, dadurch gekennzeichnet, daß die beiden Netzteile (26, 28) einzelne Module sind und daß die beiden Netzteile (26,28) zusammen mit dem PC (24) eine modular aufgebaute Umlufteinrichtung zum Kühlen und Lüften der sie bildenden Komponenten sind.

9. Aufnahmevorrichtung nach einem der Ansprüche 1 bis 8, dadurch gekennzeichnet, daß der Formkörper (16) elastisch ausgebildete Auflagebereiche (50) für den Drucker (21) aufweist.

10. Aufnahmevorrichtung nach einem der Ansprüche 1 bis 9, dadurch gekennzeichnet, daß eine elastisch ausgebildete Abdeckung (52,58) zur Anlage an der dem Formkörper (16) abgewandten Oberseite zumindest von Notebook (24) und/oder Drucker (21) vorgesehen ist.

11. Aufnahmevorrichtung nach Anspruch 10, dadurch gekennzeichnet, daß die Abdeckung (52,58) eine elastische Kassette (52) und/oder eine elastische Dämpfungsschicht (58) ist.

## Claims

1. An accommodating device for a portable PC, particularly for a notebook, and for peripheral devices such as a printer (21) and telecommunications devices, comprising
- a principle power-supply unit (26) connectible to the voltage network, for generating the required operating voltages for the peripheral devices from the network voltage,
- a separate PC power supply unit (28) connectible to the voltage network, for generating the required operational voltages for the PC (24),
- both of said power supply units (26,28) being arranged underneath the PC (24),
**characterized in**
- that a cooling air flow generator (34) is provided for generating a cooling air flow for cooling the principle power-supply unit (26),
- that the PC power supply unit (28) is arranged in the cooling air flow,
- that a shaped body (16) resistant to bending is provided for accommodating the PC (24), the peripheral devices and the two power supply units (26,28),
- that the shaped body (16) comprises a receiving portion (20) with an interrupted, non-continuous receiving face (30) for the PC (24), provided with elastic support portions (50), such that, between the shaped body (16) and the PC (24), at least one air inlet means (42) remains underneath the PC (24) to allow air to enter the receiving portion (20), and an air outlet means (44) remains underneath the PC (24) for discharging air from the receiving portion (20), and
- that deepened receiving recesses (22,23) for the two power supply units (26,28) are provided within the receiving portion (20).

2. The accommodating device according to claim 1, characterized in that the cooling air flow generator (34) is a blower.

3. The accommodating device according to claim 2, characterized in that the blower is accommodated in the principle power-supply unit (26) and that the principle power-supply unit (26) comprises an air inlet means (38) and an air outlet means (40).

4. The accommodating device according to any one of claims 1 to 3, characterized in that the two power-supply units (26,28) are arranged downstream or upstream or the one power-supply unit (26;28) is arranged downstream and the other power-supply unit (28;26) is arranged upstream of the cooling air flow generator (34).

5. The accommodating device according to any one of claims 1 to 4, characterized in that the cooling air flow generator (34) is arranged in such a manner that the cooling air flow streams along the bottom side (32) of the PC (24) facing towards the power supply units (26,28).

6. The accommodating device according to any one of claims 1 to 5, characterized in that the PC (24), the two power supply units (26,28), the cooling air flow generator (34) and the peripheral devices are accommodated in a suitcase, particularly in a file case (10).

7. The accommodating device according to any one of claims 1 to 6, characterized in that the shaped body (16) can be inserted into a half-shell (12) of a suitcase, particularly of a file case (10).

8. The accommodating device according to any one of claims 1 to 7, characterized in that the two power supply units (26,28) are individual modules and that the two power supply units (26,28) together with the PC (24) form a modular air-circulating means for cooling and venting its constituent components.

9. The accommodating device according to any one of claims 1 to 8, characterized in that the shaped body (16) comprises elastic support portions (50) for the printer (21).

10. The accommodating device according to any one of claims 1 to 9, characterized in that an elastically resilient cover (52,58) is provided for abutment on the upper side of at least the notebook (24) and/or the printer (21) which is facing away from the shaped body (16).

11. The accommodating device according to claim 11, characterized in that the cover (52,58) is an elastic cassette (52) and/or an elastic damping layer (58).

## Revendications

1. Dispositif de logement pour un ordinateur personnel portable, notamment un carnet de notes, et des dispositifs périphériques, tels qu'une imprimante (21) et des dispositifs de télécommunication, comprenant
- un bloc d'alimentation principal (26) raccordable au réseau électrique et servant à produire les tensions de fonctionnement nécessaires aux dispositifs périphériques à partir de la tension du réseau et
- un bloc d'alimentation d'ordinateur personnel (28) séparé raccordable au réseau d'alimentation et servant à produire les tensions de fonctionnement nécessaires à l'ordinateur personnel (24),
- les deux blocs d'alimentation (26, 28) étant disposés au-dessous de l'ordinateur personnel (24),
caractérisé
- en ce qu'il est prévu un dispositif de production de flux d'air de refroidissement (34) servant à produire un flux d'air de refroidissement pour refroidir le bloc d'alimentation principal (26),
- en ce que le bloc d'alimentation d'ordinateur personnel (28) est disposé dans le flux d'air de refroidissement,
- en ce qu'il est prévu un corps moulé (16) rigide à la flexion servant à loger l'ordinateur personnel (24), les dispositifs périphériques et les deux blocs d'alimentation (26, 28),
- en ce que le corps moulé (16) comporte une zone de logement (20) présentant, pour l'ordinateur personnel (24), une surface de logement (30) interrompue et ne faisant pas tout le tour, pourvue de zones d'appui (50) de structure élastique, de façon telle qu'entre le corps moulé (16) et l'ordinateur personnel (24), il subsiste au moins une entrée d'air (42) servant à l'entrée, servant à l'entrée d'air dans la zone de logement (20) au-dessous de l'ordinateur personnel (24), et une sortie d'air (44) servant à la sortie d'air hors de la zone de logement (20) au-dessous de l'ordinateur personnel (24) et
- en ce qu'à l'intérieur de la zone de logement (20), il est prévu des parties en retrait de logement (22, 23) disposées plus profondément et destinées aux deux blocs d'alimentation (26, 28).

2. Dispositif de logement suivant la revendication 1, caractérisé en ce que le dispositif de production de flux d'air de refroidissement (34) est un ventilateur.

3. Dispositif de logement suivant la revendication 2, caractérisé en ce que le ventilateur est placé dans le bloc d'alimentation principal (26) et en ce que le bloc d'alimentation principal (26) comporte une entrée d'air (38) et une sortie d'air (40).

4. Dispositif de logement suivant l'une des revendications 1 à 3, caractérisé en ce que les deux blocs d'alimentation (26, 28) sont disposés en aval ou en amont du dispositif de production de flux d'air de refroidissement (34), ou un premier bloc d'alimentation (26 ; 28) en aval du dispositif et l'autre bloc d'alimentation (28 ; 26) en amont.

5. Dispositif de logement suivant l'une des revendications 1 à 4, caractérisé en ce que le dispositif de production de flux d'air de refroidissement (34) est disposé de façon que le flux d'air de refroidissement passe sur la face inférieure (32) de l'ordinateur personnel (24) tournée vers les blocs d'alimentation (26, 28), le long de cette face.

6. Dispositif de logement suivant l'une des revendications 1 à 5, caractérisé en ce que l'ordinateur personnel (24), les deux blocs d'alimentation (26, 28), le dispositif de production de flux d'air de refroidissement (34) et les dispositifs périphériques sont placés dans une mallette, notamment une mallette porte-documents (10).

7. Dispositif de logement suivant l'une des revendications 1 à 6, caractérisé en ce que le corps moulé (16) peut être placé dans une demi-coque (12) d'une mallette, notamment d'une mallette porte-documents (10).

8. Dispositif de logement suivant l'une des revendications 1 à 7, caractérisé en ce que les deux blocs d'alimentation (26, 28) sont des modules individuels et en ce que les deux blocs d'alimentation (26, 28) forment, en commun avec l'ordinateur personnel (24), un dispositif de circulation d'air de structure modulaire et servant à refroidir et aérer les composants les constituant.

9. Dispositif de logement suivant l'une des revendications 1 à 8, caractérisé en ce que le corps moulé (16) comporte des zones d'appui (50) de structure élastique et destinées à l'imprimante (21).

10. Dispositif de logement suivant l'une des revendications 1 à 9, caractérisé en ce qu'il est prévu un élément de recouvrement (52, 58) de structure élastique et destiné à s'appuyer sur la face supérieure, tournée à l'opposé du corps moulé (16), d'au moins le carnet de notes (24) et/ou de l'imprimante (21).

11. Dispositif de logement suivant la revendication 10, caractérisé en ce que l'élément de recouvrement (52, 58) est une cassette (52) élastique et/ou une couche d'amortissement (58) élastique.
